# EUROPEAN PATENT APPLICATION

(11) **EP 2 418 112 A2**
(43) Date of publication of application: **15.02.2012**
(21) Application number: 11176286.0
(22) Date of filing: 02.08.2011
(51) Int. Cl.: B60H 1/03, F01P 7/14

(54) **Arrangement for warming of coolant in a cooling system**

(30) Priority: 12.08.2010 SE 1050850
(71) Applicant: Scania CV AB, 151 87 Södertälje (SE)
(72) Inventor: Kardos, Zoltan, 151 35 Södertälje (SE); Hall, Ola, 117 67 Stockholm (SE)

(57) **Abstract**

The present invention relates to an arrangement for warming of coolant in a cooling system of a vehicle (1). The cooling system comprises a supplementary heater (24) adapted to making it possible for at least one component in the cooling system to be warmed when a combustion engine (2) is not activated. The arrangement comprises valves (21, 31, 36) adapted to leading the coolant through an alternative line circuit when the heating unit (24) is activated. The alternative line circuit comprises lines (23, 30, 32) which lead coolant to and from expansion tank (20). The alternative line circuit comprises at least one component (8, 28) of the cooling system's ordinary line circuit which needs warming by the supplementary heater (24). The alternative line circuit lacks at least one component of the ordinary line circuit (5, 10, 14, 18) which does not need warming by the supplementary heater (24).

## Description

### BACKGROUND TO THE INVENTION AND PRIOR ART

The present invention relates to an arrangement for warming of coolant in a cooling system according to the preamble of claim 1.

A known practice is to use the coolant which cools a combustion engine to warm a vehicle cab at times when the engine is not running. In such cases an electric supplementary heater may be provided at a suitable location in the cooling system. When the cab is to be warmed, the supplementary heater is activated and at the same time the coolant pump of the cooling system is switched on. Warm coolant may thus be caused to circulate through the cooling system and to supply heat to the cab, e.g. at times when the vehicle is parked and the driver intends to sleep in the cab. Such a supplementary heater may also be used to provide rapid warming of the cab and components of the vehicle such as the engine's cylinder heads so that with advantage they quickly reach their operating temperature after a cold start.

Supplementary heaters are thus used primarily to maintain a desired temperature in the cab when the engine is not running or when the vehicle is starting from cold. The coolant which cools the engine is also used, particularly in heavy vehicles, to cool other components of the vehicle. The coolant may for example be used to cool motor oil in an oil cooler, gearbox oil in an oil cooler, recirculating exhaust gases in an EGR cooler, charge air in a charge air cooler, retarder oil in an oil cooler and air compressors for braking, etc. When the engine is not running, these components need no cooling. When the engine has been not running for some time, these coolers and media will be at substantially the same temperature as the surroundings. If the surroundings are at a low temperature, much of the heat which the supplementary heater supplies to the coolant will be distributed to these components when the warm coolant is circulated in the cooling system. For this reason, supplementary heaters in cooling systems need a relatively large overcapacity to be able to provide the cab and the engine's cylinder heads with warming to a desired temperature.

### SUMMARY OF THE INVENTION

The object of the present invention is to propose a arrangement for warming of coolant in a cooling system in which the warm coolant is mainly required to deliver the thermal energy received by it from a supplementary heater to one or more specific components which need the heat from the supplementary heater.

This object is achieved with the arrangement of the kind mentioned in the introduction which is characterised by the features indicated in the characterising part of claim 1. According to the present invention, the coolant is circulated through an alternative line circuit when the supplementary heater is activated. This alternative line circuit extends through the cooling system's expansion tank. This means that the existing expansion tank and connecting lines can be used to constitute the alternative line circuit. With advantage, the alternative line circuit comprises only components which need the heat from the supplementary heater. Thus the coolant undergoes no unnecessary temperature losses when it circulates in the alternative line circuit. Substantially all of the thermal energy supplied by the supplementary heater to the coolant can therefore be used to warm the specific component or components which need the heat from the supplementary heater. In such an arrangement a supplementary heater with a relatively low power rating may be used.

According to an embodiment of the invention, said flow means comprise at least one valve means capable of being placed in a first position in which it leads the coolant flow through the ordinary line circuit, and in at least one further position in which it leads the coolant flow through the alternative line circuit. By such valve means the coolant flow can relatively easily be directed so that the coolant is only led past the component or components in the ordinary line circuit which need warming by the supplementary heater.

According to a preferred embodiment of the invention, the alternative line circuit may comprise at least two components which need warming by the supplementary heater. Said two components which need warming by the supplementary heater may be arranged in parallel in the alternative line circuit. Warm coolant at the same temperature will thus warm both of the components. Alternatively, said two components which need warming by the supplementary heater may be arranged in series in the alternative line circuit. In that case the warm coolant from the supplementary heater is used initially to warm one of the components and thereafter to warm the other component. The component with the greater need to be warmed by the warm coolant will here be situated upstream of the other component with respect to the direction of coolant flow in the alternative line circuit.

According to another embodiment of the invention, the alternative line circuit comprises an extra flow means adapted to circulating the coolant in the alternative line circuit. The alternative flow means may take the form of an extra coolant pump situated at an appropriate location in the alternative line circuit. The location of the ordinary coolant pump in a cooling system is often such that it cannot be used to circulate the coolant in the alternative line circuit. If the location of the ordinary coolant pump is such that it can also be used to circulate the coolant in the alternative line circuit, it can obviously also be used for this purpose.

According to another embodiment of the invention, the alternative line circuit comprises at least one vent line in the ordinary line circuit which is here used to lead coolant to and/or from the expansion tank. Vent lines connected to the expansion tank are provided at a number of locations in the ordinary line circuit. It is often appropriate to use one or more such existing lines to lead coolant in the alternative line circuit to and/or from the expansion tank.

According to another preferred embodiment of the invention, said activation means can be activated manually. Such a manual activation means may be a button means or the like. A control unit may receive information from such a manual button means and activate the supplementary heater, switch on the extra flow means and place the valves in such positions that the coolant is led through the alternative line circuit. Alternatively, or in combination, said activation means may be activated automatically. This may for example take place each time a vehicle makes a cold start or when it makes a cold start at a time when the surroundings are below a lowest acceptable temperature

According to another preferred embodiment, a component which needs to be supplied with warm coolant from the supplementary heater is a heating element for warming of air in a cab of the vehicle. Supplementary heaters in the cooling system are primarily applied to maintaining a desired temperature in a cab when the engine is not running. The supplementary heater may for example be activated when a driver rests in the vehicle at a time when the surroundings are at a low temperature. Alternatively, or in combination, said components which need to be supplied with warm coolant from the supplementary heater may be the engine's cylinder heads. It is very important that the cylinder heads should as quickly as possible reach an ideal operating temperature.

### BRIEF DESCRIPTION OF THE DRAWINGS

Preferred embodiments of the invention are described below by way of examples with reference to the attached drawings, in which:
- Fig. 1: depicts an arrangement according to a first embodiment of the invention and
- Fig. 2: depicts an arrangement according to a second embodiment of the invention.

### DETAILED DESCRIPTION OF PREFERRED EMBODIMENTS OF THE INVENTION

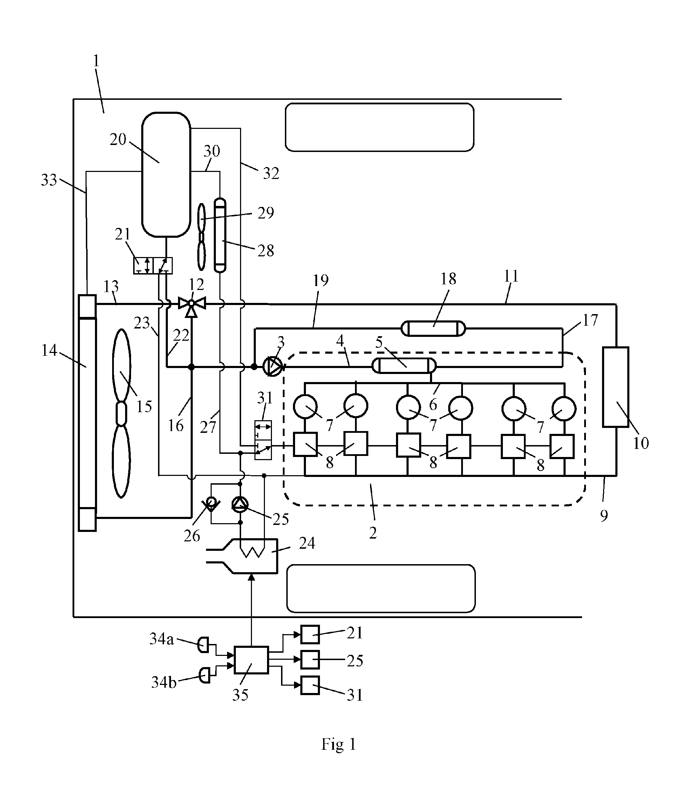

Fig. 1 depicts schematically a vehicle 1 powered by a combustion engine 2. The vehicle 1 is with advantage a heavy vehicle. The engine 2 may be a supercharged diesel engine. The engine 2 is cooled by coolant which circulates in the cooling system. A coolant pump 3 circulates the coolant in the cooling system. The coolant pump 3 in this case pumps coolant via a line 4 to an oil cooler 5 for cooling of motor oil. Part of the coolant from the oil cooler 5 is thereafter led to cooling ducts 6 of the engine 2. The cooling ducts 6 have an extent such that they inter alia cool the engine's cylinders 7 and cylinder heads 8 which are schematically depicted in the drawings. The coolant which passes the cylinder heads 8 is led to a line 9 which leads the coolant to an oil cooler 10 for cooling of retarder oil. After the oil cooler 10 the coolant is led through a line 11 to a thermostat 12 in the cooling system.

When the coolant has reached its operating temperature, the thermostat 12 leads it via a line 13 to a radiator 14 fitted at a forward portion of the vehicle 1. The coolant is cooled here by air which is forced through the radiator 14 by a cooling fan 15. After it has been cooled in the radiator 14, the coolant is led back to the coolant pump 3 via a line 16. At times when the coolant has not reached its operating temperature, the thermostat 12 leads it directly to the line 16 and the coolant pump 3 without any cooling in the radiator 14. The cooling system in this case comprises also a line 17 which receives part of the coolant which has passed through the oil cooler 5. This coolant is led to an EGR cooler 18 for cooling of recirculating exhaust gases. The coolant is thereafter led to the line 16 and the coolant pump 3 via a line 19.

The cooling system comprises an expansion tank 20 which is alternatively connected via a valve 21 to an ordinary static line 22 or to an alternative line 23. When the valve 21 is placed in a first position, it connects the expansion tank 20 to the ordinary static line 22 which is itself connected to the line 16. This is the situation during normal operation of the cooling system. When the valve 21 is placed in a second position depicted in Fig. 1, it connects the expansion tank 20 to the alternative line 23. The alternative line 23 leads the coolant from the expansion tank 20 to a supplementary heater 24. An extra coolant pump 25 is situated close to the supplementary heater 24. The extra coolant pump 25 is arranged in parallel relative to a one-way valve 26. The extra coolant pump 25 leads at least part of the coolant via a line 27 to a heating element 28 situated in or close to a cab of the vehicle 1.

A fan 29 is adapted to forcing an air flow through the heating element 28 in order to provide more effective warming of the air in the cab. A return line 30 connects the heating element 28 to the expansion tank 20. A valve 31, when in a first position, connects the cylinder heads 8 to the expansion tank 20 via a vent line 32. The valve 31, when in a second position depicted in Fig. 1, connects the cylinder heads 8 to the line 27. The radiator 14 is also connected to the expansion tank via a vent line 33. Activation of the supplementary heater 24 may in this case be effected by means of a first button means 34a and a second button means 34b. The button means 34a, 34b are connected to a control unit 35. When it detects that one of the button means 34a, 34b has been pushed, the control unit 35 activates the supplementary heater 24. The control unit 35 activates at the same time the extra coolant pump 25. The control unit 35 also places the valve 21 in the second position. The control unit 35 places the valve 31 in the first or second position, depending on which of the two button means 34a, 34b has been pressed.

During normal operation of the vehicle when neither of the button means 34a, 34b has been pressed, the coolant pump 3 circulates coolant in the ordinary line circuit. The coolant then cools motor oil in the oil cooler 5, the cylinders 7 and cylinder heads 8 of the engine 2, retarder oil in the oil cooler 10 and recirculating exhaust gases in the EGR cooler 18. The warm coolant is cooled in the radiator 14. Warm coolant may be led to the heating element 28 when the air in the cab needs warming, in which case part of the warm coolant in the line 9 is led to the heating element 28 via the unactivated supplementary heater 24, the one-way valve 26 and the line 27. The return line 30 leads the coolant thereafter to the expansion tank 20.

A driver wishing the cab to be warmed when the engine is not running presses the first button means 34a. When the control unit 35 receives this information, it activates the supplementary heater 24 and the extra coolant pump 25. At the same time, the control unit 35 places the valve 21 in the second position so that the expansion tank 20 is connected to the alternative line 23. The valve 31 is placed in the first position so that the coolant from the extra coolant pump 25 is led only to the heating element 28 and not to the cylinder heads 8. The extra coolant pump 25 then draws warm coolant from the supplementary heater 24. The warm coolant is led from the extra coolant pump 25 to the line 27 and the heating element 28. The warm coolant here warms the air in the cab. The coolant is thereafter led to the expansion tank 20 via the return line 30. The coolant is led out from the expansion tank 20 and back to the supplementary heater 24 via the valve 21 and the alternative line 23. In this situation, the valves 21, 31 direct the coolant flow so that coolant is only circulated in an alternative line circuit which is clearly defined relative to the ordinary line circuit. The alternative line circuit comprises only one heat-transfer component, viz. the heating element 28. Other components whereby heat transfer takes place in the ordinary line circuit are not part of the alternative line circuit. Substantially all of the thermal energy which the supplementary heater 24 supplies to the coolant can here be delivered to the air which is forced through the heating element 28. The amount of energy consumed to heat the cab will in this case be quite small and a supplementary heater 24 with a relatively low power rating may be used.

When a driver intends to start, or has already started, the vehicle from cold, the button means 34b may be pressed. When the control unit 35 receives this information, it activates the supplementary heater 24 and the extra coolant pump 25. At the same time, the control unit 35 places the valve 21 in the second position so that the expansion tank 20 is connected to the alternative line 23, and the valve 31 in the second position so that the coolant from the extra coolant pump 25 is led both to the heating element 28 and to the cylinder heads 8. In this situation, part of the warm coolant is thus led from the extra coolant pump 25 to the line 27 and the heating element 28. The warm coolant here warms the air in the cab. The coolant is thereafter led to the expansion tank 20 via the return line 30. The coolant in the expansion tank 20 is led back, via the valve 21 and the alternative line 23, to the supplementary heater 24 for renewed warming.

A remaining portion of the warm coolant is led from the extra coolant pump 25 to the cylinder heads 8. The warm coolant here warms the cylinder heads 8. The coolant is thereafter led back to the supplementary heater 24 via the line 9. In this case, the valves 21, 31 direct the coolant flow so that the warm coolant circulates in two parallel loops. In the one loop, which comprises the heating element 28, the air in the cab is warmed by the coolant, and in the other loop the cylinder heads 8 are warmed by the coolant. A very large proportion of the thermal energy supplied to the coolant by the supplementary heater 24 may also be used here to warm the air in the cab and the cylinder heads 8. This case likewise involves using an alternative line circuit which comprises no components which need warming by the supplementary heater 24. Here again the energy consumption will be small.

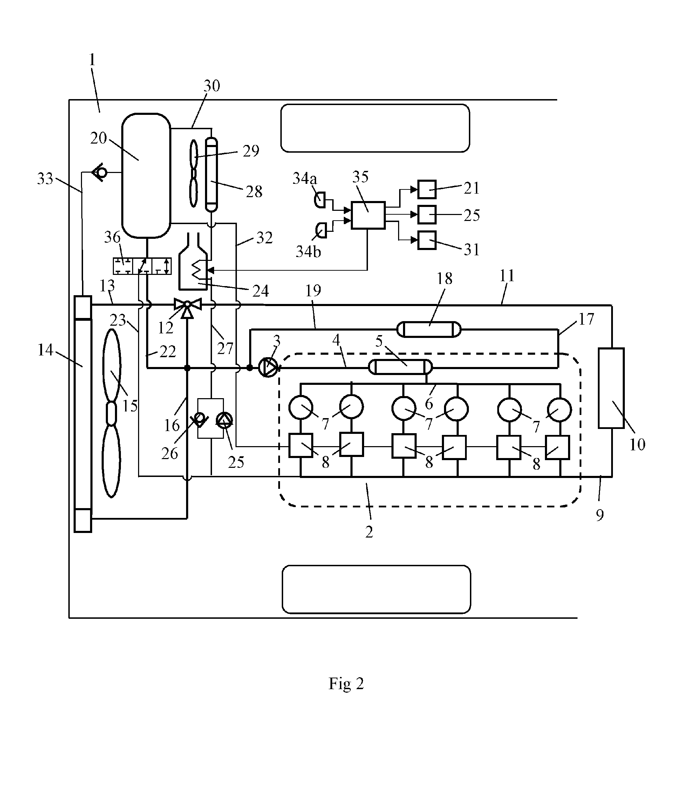

Fig. 2 depicts an alternative embodiment. In this case only one valve 36 is used, but it can be placed in three different positions. During normal operation of the vehicle 1 when neither of the button means 34a, 34b is pressed, the control unit 35 places the valve 36 in a first position which connects the expansion tank 20 to the ordinary static line 22. The ordinary coolant pump 3 thus circulates coolant round in the ordinary line circuit. This means that the coolant cools motor oil in the oil cooler 5, the cylinder 7 and cylinder heads 8 of the engine 2, retarder oil in the oil cooler 10 and recirculating exhaust gases in the EGR cooler 18. The warm coolant is thereafter cooled in the radiator 14.

A driver wishing the cab to be warmed when the vehicle is parked presses the first button means 34a. When the control unit 35 receives this information, it activates the supplementary heater 24 and the extra coolant pump 25. At the same time, the control unit 35 places the valve 36 in the second position as depicted in Fig. 2 so that the expansion tank 20 is connected to the alternative line 23. In this situation the extra coolant pump 25 draws coolant from the line 23. The coolant is led from the extra coolant pump 25 to the line 27 and the supplementary heater 24. The coolant is cooled in the supplementary heater 24 and is thereafter led to the heating element 28. The warm coolant here warms the air in the cab. The coolant is thereafter led to the expansion tank 20 via the return line 30. The coolant in the expansion tank 20 is thereafter led back to the extra coolant pump 25 via the valve 21 and the alternative line 23. This case likewise involves an alternative line circuit for the coolant which comprises only a small portion of the ordinary line circuit. The only heat-transfer component of the ordinary line circuit which is in the alternative line circuit is the heating element 28.

If a driver intends to start, or has already started, the vehicle from cold, the second button means 34b is pressed. When the control unit 35 receives this information, it activates the supplementary heater 24 and the extra coolant pump 25. At the same time, the control unit 35 places the valve 31 in a third position. The valve 31 thus breaks the connection of the expansion tank 20 to both the static line 22 and the alternative line 23. In this situation, the extra coolant pump 25 circulates coolant in the line 27 to the supplementary heater 24. The warm coolant from the supplementary heater 24 is thereafter led to the heating element 28. The warm coolant here warms the air which is forced through the heating element 28. The coolant is thereafter led to the expansion tank 20 via the return line 30. The coolant leaving the expansion tank 20 is led via the vent line 32 to the cylinder heads 8, which are thus warmed by the coolant. The coolant is thereafter led to the line 9, from which it is led back to the extra coolant pump 25. In this case the warm coolant warms initially the cab and thereafter the cylinder heads 8. The heating element 28 and the cylinder heads 8 are here arranged in series in the alternative line circuit. This case likewise involves an alternative line circuit in which only components 8, 28 need warming by the supplementary heater 24.

The invention is in no way confined to the embodiment to which the drawings refer but may be varied freely within the scopes of the claims.

## Claims

1. An arrangement for warming of coolant in a cooling system for a combustion engine (2) in a vehicle (1), which cooling system comprises an ordinary line circuit adapted to leading the coolant to heat-transfer contact with various components (5, 6, 8, 10, 14, 28) of the vehicle, an expansion tank (20), a supplementary heater (24) adapted to effecting warming of the coolant, and activation means (34a, 34b) adapted to activating the supplementary heater (24), **characterised in that** the arrangement comprises flow means (21, 31, 36) adapted to leading the coolant through an alternative line circuit when the heating unit (24) is activated, such that the alternative line circuit comprises at least one line (30) which leads coolant to the expansion tank (20) and at least one line (23, 32) which leads coolant from the expansion tank (20), and such that the alternative line circuit comprises at least one component (8, 28) of the ordinary line circuit which needs warming by the supplementary heater (24), but does not comprise at least one component of the ordinary line circuit (5, 10, 14, 18) which does not need warming by the supplementary heater (24).

2. An arrangement according to claim 1, **characterised in that** said flow means comprise at least one valve means (21, 31, 36) which can be placed in a first position in which it leads the coolant flow through the ordinary line circuit, and in at least one further position in which it leads the coolant flow through the alternative line circuit.

3. An arrangement according to claim 1 or 2, **characterised in that** the alternative line circuit comprises at least two components (8, 28) which need warming by the supplementary heater (24).

4. An arrangement according to claim 3, **characterised in that** said two components (8, 28) which need warming by the supplementary heater (24) are arranged in parallel in the alternative line circuit.

5. An arrangement according to claim 3, **characterised in that** said two components (8, 28) which need warming by the supplementary heater (24) are arranged in series in the alternative line circuit.

6. An arrangement according to any one of the foregoing claims, **characterised in that** the alternative line circuit comprises an extra flow means (25) adapted to circulating the coolant in the alternative line circuit.

7. An arrangement according to any one of the foregoing claims, **characterised in that** the alternative line circuit comprises at least one vent line (32) of the ordinary line circuit which is used to lead coolant to and/or from the expansion tank (20).

8. An arrangement according to any one of the foregoing claims, **characterised in that** said activation means (34a, 34b) can be activated manually.

9. An arrangement according to any one of the foregoing claims, **characterised in that** a component (28) which needs to be supplied with warm coolant from the supplementary heater is a heating element (28) for warming of air in a cab of the vehicle (1).

10. An arrangement according to any one of the foregoing claims, **characterised in that** a component (28) which needs to be supplied with warm coolant from the supplementary heater is a cylinder head (8) of the engine (2).
